# EUROPÄISCHE PATENTANMELDUNG

(11) **EP 0 624 761 A1**
(43) Veröffentlichungstag der Anmeldung: **17.11.1994**
(21) Anmeldenummer: 94106579.9
(22) Anmeldetag: 27.04.1994
(51) Int. Cl.: F24H 9/12, F16K 11/00

(54) **Anschlussvorrichtung zum Anschluss eines Heizkörpers und Patrone zum Einbau in diese**

(30) Priorität: 10.05.1993 DE 4315530
(71) Anmelder: KERMI GmbH, D-94447 Plattling (DE)
(72) Erfinder: Jander, Kurt, D-94551 Lalling (DE); Hofinger, Roland, D-94469 Deggendorf (DE); Fonfara, Harald, D-94551 Lalling (DE); Seidl, Hermann, D-94522 Wallersdorf (DE)
(74) Vertreter: Schwabe - Sandmair - Marx

(57) **Zusammenfassung**

Die Erfindung betrifft eine Anschlußvorrichtung zum Anschluß eines Körpers, vorzugsweise Heizkörpers, an ein Rohrsystem, vorzugsweise Heizungsrohrsystem, einer mit einem Strömungsmittel, vorzugsweise ein Wärmeträgermedium, betriebenen Heizungsanlage, mit einem Gehäuse (10), das Anschlußabschnitte zur Verbindung mit dem Körper und dem Rohrsystem, sowie wenigstens eine Stelleinrichtung (28,40) zur Beeinflussung des Strömungsmittels in einem Durchströmungskanal (12,16 und 14,18) durch das Gehäuse (10) aufweist. Im Gehäuse (10) ist ein wenigstens einseitig offener Aufnahmekanal bzw. -bohrung (20) ausgebildet, der wenigstens einen Durchströmungskanal (12,16, und 14,18) schneidet und in der eine Funktionseinrichtung mit dem wenigstens einen Stellorgan (28,40) sitzt.

## Beschreibung

Die Erfindung betrifft eine Anschlußgarnitur zum Anschluß eines Heizkörpers an das Heizungsrohrsystem einer mit einem Heizungs-Strömungsmittel betriebenen Heizungsanlage, gemäß dem Oberbegriff des Anspruches 1, und umfaßt auch eine erfindungsgemäße Patrone zum Einbau in diese Anschlußgarnitur, wie im Anspruch 15 beschrieben.

Die Gehäuse solcher bekannter Anschlußgarnituren sind in der Regel aus Buntmetall hergestellt und nachbearbeitet, wobei das Nachbearbeiten ihrer drei oder vier Anschlußstutzen sich auf das Schneiden eines Außengewindes und einer geraden Endfläche beschränkt; da aber eine solche Anschlußgarnitur auch Stellorgane zum Absperren, Steuern, Drosseln und/oder Umlenken des Heizungs-Strömungsmittels, in der Regel warmen Wassers, also kurz zum Beeinflussen dieses Heizungs-Strömungsmittels, enthält, müssen für diese Stellorgane nicht nur präzise Aufnahmebohrungen in das Gehäuse eingebracht werden, die dort mindestens einen der die Anschlußstutzen verbindenden Durchströmungskanäle anschneiden, sondern in den Innenseiten dieser Bohrungen sind Innengewinde und hochpräzise Ventilsitze herauszuarbeiten, was wegen der geforderten Genauigkeit und Oberflächengüte mehrere Fertigungsdurchgänge benötigt.

Da die einzelnen Aufnahmen und Sitze unterschiedlich ausgerichtet sind, muß das Werkstück oft umgespannt werden. Wegen der unregelmäßigen, asymmetrischen Form des Werkstückes ist aber die Verwendung herkömmlicher Automaten, etwa Revolver-Drehautomaten, nicht möglich.

Im übrigen muß wegen der geforderten, hohen Oberflächengüte etwa der Ventilsitz das Werkstück mindestens vor der Endbearbeitung sorgfältig gesäubert werden, damit nicht von der Vorbearbeitung verbliebene Späne zwischen Werkzeug und Werkstückfläche gelangen und diese dadurch beschädigen. Auch nach der Endbearbeitungg ist eine solche Säuberung erforderlich, damit nicht Späne zwischen Ventilkörper und Ventilsitze gespült werden und dort zu Dichtungsproblemen führen.

Angesichts der vielen Kanäle des Gehäuses ist eine solche Säuberung jedesmal recht aufwendig.

Außerdem ist für die unterschiedlichen Heizungssysteme (Ein- oder Zweirohrsytem) und örtlichen Einbaufälle (Lage am Heizkörper) eines solchen Ventils jedesmal auch eine unterschiedliche Anschlußgarnitur mit einem unterschiedlichen Gehäuse erforderlich, was einen hohen Fertigungs- und Lagerhaltungsaufwand bedeutet; außerdem muß ein Montagetrupp stets eine redundante Anzahl der unterschiedlichen Anschlußgarnituren mitführen, um zu vermeiden, daß ein Monteur wegen eines fehlenden oder falschen Ventils noch einmal zurück in die Werkstatt fahren muß.

Angesichts dieser Problemlage hat die Erfindung die Aufgabe, die eingangs genannte, bekannte Anschlußgarnitur dahingehend weiterzubilden, daß sie unter Beibehaltung oder sogar noch Steigerung der bisher erreichten Qualität einfacher herstellbar ist, ferner ein und dasselbe Gehäuse für unterschiedliche Stellorgane oder Anordnungen von Stellorganen nutzbar ist und damit der Lagerhaltungsaufwand verringert werden kann, so daß insgesamt der mit der Anschlußgarnitur verknüpfte Aufwand in jeder Hinsicht verringet, die Qualität aber beibehalten oder sogar noch gesteigert werden kann.

Unter Qualität wird hier insbesondere die Oberflächengüte der Dichtungssitze und die Sauberkeit des fertigen Ventils verstanden, also Merkmale, die sich unmittelbar auf die Lebensdauer und Funktionssicherheit des Ventiles auswirken.

Diese Aufgabe wird erfindungsgemäß durch die Merkmale des Anspruchs 1 gelöst.

Hierbei ist im Gehäuse eine Aufnahmebohrung so vorgesehen, daß sie mindestens jenen Durchströmungskanal oder jene Durchströmungskanäle anschneidet, deren Strömung durch das oder die Stelleinrichtungen bzw. -organ(e), nachfolgend Stellorgane genannt, beeinflußt werden soll(en). Bevorzugt ist diese Aufnahmeöffnung bzw. -bohrung so angeordnet, daß alle Kanäle im Gehäuse in diese einmünden, also z.B. bei einem Gehäuse mit drei oder vier zueinander parallelen Stutzen und somit vier Kanälen quer und am besten rechtwinklig zu diesen.

In dieser Aufnahmeöffnung bzw. -bohrung sitzt eine Funktionseinrichtung bzw. Patrone, die Öffnungen aufweist, welche mit mindestens jenen Kanaleinmündungen in die Aufnahmeöffnung bzw. -bohrung fluchten, d.h. auf diese so weit ausgerichtet sind, deren Durchströmung beeinflußt werden soll.

Alle die obengenannten Stelleinrichtungen bzw. -organe sind innerhalb dieser Funktionseinrichtung, nachfolgend Patrone genannt, untergebracht oder bilden diese und stehen mit den Öffnungen und damit den genannten Durchströmkanälen in Verbindung.

Die Teile der Patrone bzw. die in sie eingebauten Elemente bilden jeweils einfache, mit gängigen automatischen Werkzeugmaschinen kostengünstig, rasch und in beliebiger Menge aus einem Halbzeug, wie Rohr- oder Stangenmaterial, herstellbare Bauteile. Solche Bauteile können gegebenenfalls auch unter Nutzung von Gußverfahren oder spanlosen Verformungsverfahren hergestellt werden.

Das Gehäuse bedarf neben der üblichen und problemlosen Bearbeitung der Enden der Stutzen nur der Aufnahmebohrung, die weitgehend vorgegossen und gegebenenfalls nur auf Maß aufgebohrt oder aufgerieben zu werden braucht. Der Guß der Aufnahmeöffnung oder auch -bohrung ist deshalb verhältnismäßig einfach, weil die Aufnahmebohrung einen vergleichsweise großen Durchmesser aufweisen muß, um die alle Organe enthaltende Patrone aufnehmen zu können. Ein so großer Durchmesser ist unproblematisch, da diese Aufnahmebohrung die einzige Querbohrung bildet und somit den gesamten, zur Verfügung stehenden Raum einnehmen kann. Ein solcher Kanal bzw. eine solche Bohrung läßt sich aber besonders im Sandguß viel genauer gießen als die Bohrungen kleineren Durchmessers aus dem Stand der Technik. Bei Kokillenguß ist die gegossene Oberflächengüte unter Umständen ausreichend, so daß keinerlei Nachbearbeitung erforderlich ist.

Gehäuse und Hülse bleiben Standardteile, während sich die Art und der Aufbau der in der Patrone angeordneten Organe je nach dem angestrebten Einbauzweck ändern; so ist etwa neben mindestens einem Stellorgan dann ein Bypaßkanal vorgesehen, wenn die Anschlußgarnitur in einem Einrohr-Heizungssystem eingesetzt werden soll; der
Bypasskanal fehlt, weg die Anschlußgarnitur in einem Zweirohr-Heizungssystem eingesetzt werden soll.

Ferner kann die Patrone ein Hand-Einstellventil oder ein automatisches oder ein Thermostat-Regelventil enthalten, ein zusätzliches Absperrventil, das das Ausbauen des Heizkörpers ohne Ablassen des Heizungs-Strömungsmittels des Heizungssystems ermöglicht, einen einstellbaren oder festen Bypass-Drosselkörper usw..

In jedem der genannten Fälle können die äußeren Abmessungen der Patrone gleichbleiben, nur die Stellorgane sind unterschiedlich.

Bevorzugt weist die Patrone eine Hülse auf, in der alle Stellorgane und Verbindungsleitungen untergebracht sind und die Öffnungen aufweist, die auf die Einmündungen mindestens eines der Durchflußkanäle im Gehäuse ausgerichtet sind.

Diese Hülse schützt die Stellorgane und erleichtert das Einsetzen in die Aufnahmebohrung.

Die Hülse kann aus Metall hergestellt werden und auf jene Arten in der Aufnahmebohrung befestigt sein, die weiter unten erläutert werden.

Bevorzugt ist aber gegenwärtig eine Hülse aus einem Werkstoff, insbesondere Kunststoff, der ein wenig flexibel ist, so daß er kleine Maß- und Oberflächenungenauigkeiten der Aufnahmebohrung ausgleicht und sich an deren Wandung dichtend anlegt. Das Einpressen der ein definiertes Übermaß aufweisenden Hülse kann etwa mittels einer angepaßten Zwinge am Einbauort der Anschlußgarnitur erfolgen, wobei bevorzugt die die Hülse aufweisende, fertige Patrone eingepreßt wird.

Es ist grundsätzlich möglich, die Patrone mit thermostatisch und/oder anderweitig angesteuerten, vorzugsweise druckgesteuerten, Stellorganen auszustatten; gemäß einer bevorzugten Ausgestaltung der Erfindung sind jedoch von Hand betätigbare Bedienungselemente vorgesehen, die an jenem Ende der Hülse angeordnet sind, das vom offenen Ende der Aufnahmebohrung her zugänglich ist oder aus diesem herausragt.

Die Bedienungselemente können, soweit mehrere vorgesehen sind, als nebeneinanderliegende Schieber ausgebildet sein, sind aber bevorzugt als konzentrische Drehgriffe ausgebildet, wie dies etwa von Rundfunkgeräten her bekannt ist, oder sind mindestens konzentrisch angeordnet, wobei das radial innenliegende Bedienungselement durch die Mitte des radial außenliegenden Bedienungselementes hindurch entweder dieses überragt oder zugänglich ist.

Die Aufnahmebohrung braucht grundsätzlich keinen runden Querschnitt aufzuweisen; ein solcher ist der einfacheren Herstellung halber aber bevorzugt. Die Aufnahmebohrung kann auch konisch sein, was den Vorteil hat, daß die ebenfalls konische Hülse leicht in dichtenden Preßsitz in dieser Bohrung gebracht werden kann, wobei sie etwa mittels einer Überwurfmutter gehalten sein kann.

Bevorzugt ist aber die Aufnahmebohrung kreiszylindrisch ausgebildet, da hierdurch auf einfache Weise die Ausrichtung der Öffnungen in der Hülse auf die Einmündungen der Kanäle im Gehäuse sichergestellt werden kann.

Die zylindrische Aufnahmebohrung ist entweder als Sackbohrung oder bevorzugt als Durchgangsbohrung ausgebildet; während der Boden einer Sackbohrung als Anschlag für die Hülse dienen kann, hat die Durchgangsbohrung den Vorteil, daß die Hülse von beiden Enden her eingesetzt werden kann, so daß die an der Hülse getragenen Bedienungselemente bei rechts oder links vom Heizkörper angebrachter Anschlußgarnitur wahlweise nach rechts oder links weisen. Hierdurch wird die erfindungsgemäße Anschlußgarnitur noch vielfältiger verwendbar.

Eine besonders vorteilhafte Ausgestaltung ergibt sich sowohl für Anschlußvorrichtungen mit nur einem beeinflußbaren Strömungsdurchgang für ein Strömungsmittel, insbesondere für einen Wärmeträger, wenn die Stelleinrichtung bzw. Stelleinrichtungen oder -organe über mindestens eine Federeinrichtung, vorzugsweise eine konische Spiralfeder oder dergleichen, betätigbar sind. Dabei ist es für die Betätigung der Stellorgane ganz besonders vorteilhaft, wenn auf die Federeinrichtung sowohl in Axialrichtung als auch in Umfangsrichtung der Stellorgane Kräfte aufbringbar sind. Wird nämlich durch eine elektrische bzw. elektromagnetische Antriebseinrichtung bzw. durch eine Bedienungsperson oder dergleichen eine Kraft auf die Federeinrichtung ausgeübt, so ist es möglich, zugleich eine Kraft in Axialrichtung der Stellorgane als auch in Umfangsrichtung der Stellorgane auszuüben, so daß das bzw. die Stellorgane gedreht werden können und in Axialrichtung beispielsweise aus dem Gehäuse bzw. der Hülse herausgezogen werden können. Entspannt sich die Federeinrichtung, kann das bzw. können die Stellorgane in Axialrichtung wieder zurückschnellen bzw. sich zurückbewegen, um eine vorgegebene Position einzunehmen, wobei der Strömungsmitteldurchgang bei einer Anschlußvorrichtung mit nur einem Strömungsmitteldurchgang geöffnet oder geschlossen werden kann bzw. bei einer Anschlußvorrichtung mit zwei oder mehr Strömungsmitteldurchgängen, einer, zwei oder eine Auswahl von mehreren Strömungsmitteldurchgängen geschlossen werden können und/oder zwei oder eine Auswahl von Strömungsmitteldurchgängen über Bypaßleitungen miteinander verbunden werden können.

Dabei ist es auch sehr vorteilhaft, wenn das Gehäuse und/oder die Hülse, in der die Funktionseinrichtung bzw. das oder die Stellorgane in der Anschlußvorrichtung eingesetzt sind, gleichermaßen oder unterschiedlich konisch zulaufen. Durch diese Maßnahme ist es möglich, daß Dichteinrichtungen, die an dem bzw. den Stellorganen angebracht sind, während irgendwelcher Stellvorgänge durch die axial wirkende Kraft der Federeinrichtung und durch die konische Erweiterung des Innenumfangs der Hülse von den Dichtflächen an dem Gehäuse bzw. an dem Innenumfang der Hülse abgezogen werden und anschließend durch Drehung eine neue Einstellung des bzw. der Stellorgane vorgenommen wird, ohne daß irgendwelche nachteiligen Beeinflussungen der Dichtungen auftreten können. Ist der Stellvorgang abgeschlossen, kann das bzw. können die Stellorgane wieder in ihre Ausgangs- bzw. Ruheposition in dem Gehäuse bzw. der Hülse zurückschnellen und die Dichtungen werden wieder an die für sie vorgesehenen Dichtflächen angepreßt. Dieses hat, wie bereits angedeutet, den Vorteil, daß einerseits die Dichtflächen, egal, ob sie in Betrieb sind oder nicht, in Anlage zum Innenumfang der Hülse bzw. des Gehäuses sind und auf diese Weise vor Verschmutzungen und dergleichen geschützt sind und andererseits durch die konkreten, über die Federeinrichtung vorgenommenen Schaltvorgänge die Dichtflächen während des Schaltens keinem Abrieb unterzogen werden.

Ganz besonders vorteilhaft ist es, wenn die Stelleinrichtung bzw. Stellorgane mittels eines axial-parallel zur Funktionseinrichtung bzw. Patrone vorzugsweise reversibel verstellbaren Bedienungselements betätigbar sind, das direkt und/oder über die mindestens eine Federeinrichtung auf die Stelleinrichtung bzw. Stellorgane einwirkt. Durch das Bedienungselement kann die besagte Kraft auf die Feder ausgeübt werden, die dazu führt, daß die Feder auf das oder die Stellorgane sowohl eine Kraft in axialer als auch in umfänglicher Richtung der Stellorgane ausübt. So könnte beispielsweise durch einfaches Drücken auf einen Druck- bzw. Betätigungsknopf die Feder in Betrieb gesetzt werden, um das bzw. die Stellorgane zu betätigen.

Eine entsprechende Betätigung ist natürlich auch ohne die Feder möglich, wobei in diesem Falle jedoch erhöhte Anforderungen an eine Bedienungsperson bzw. an eine Antriebseinrichtung zu stellen sind.

Eine weitere äußerst vorteilhafte Ausgestaltung ergibt sich, wenn mindestens eine Steuereinrichtung, vorzugsweise eine Steuerspur bzw. Steuerkulisse oder dergleichen, vorgesehen ist, mit der zumindest eine vorgebbare Stellung des bzw. der Stellorgane reversibel einstellbar ist. Mit anderen Worten, an den Stellorganen und/oder der das oder die Stellorgane aufnehmenden Hülse sind Strukturierungen vorgenommen, mittels derer eine Führung des bzw. der Stellorgane möglich ist.

Ganz besonders vorteilhaft ist es, wenn die Bewegung des bzw. der Stellorgane innerhalb der Steuer- oder auch Führungseinrichtungen mittels des Bedienungselementes bzw. des oder der Federeinrichtungen durchführbar ist. Wird das Bedienungselement betätigt, beispielsweise eine Druckkraft darauf ausgeübt, so wird die Federeinrichtung derart betätigt, daß sie das oder die Stellorgane innerhalb der Steuereinrichtungen bzw. Steuerspuren oder Steuerkulissen derart führen, daß die durch diese vorgebbaren Stellungen kontrolliert eingenommen werden können.

Ferner ergeben sich besondere Vorteile, wenn eine zusätzliche Steuereinrichtung bzw. Steuerkulisse oder dergleichen vorgesehen ist, mittels derer die in Axialrichtung wirkenden Kräfte der Federeinrichtung steuerbar sind.

Es hat sich ergeben, daß eine Kombination einer Hebekulisse in Verbindung mit einer Steuerkurve für Drehbewegungen mit Raststellungen in Verbindung mit einer Federeinrichtung, insbesondere in Form einer konischen Spiralfeder ganz besondere Vorteile im Hinblick auf die Präzision der Führung und die Schonung der Dichtungen mit sich bringt. Wird bei dieser Kombination eine Kraft auf die Federeinrichtung ausgeübt, so wird durch die Hebekulisse zunächst eine Drehung des bzw. der Stellorgane verhindert und die von der Federeinrichtung aufgebrachten Kräfte zwingen das bzw. die Stellorgane dazu, sich axial aus dem Gehäuse bzw. der Hülse herauszuheben, wobei die Dichtungen von den Dichtflächen des Gehäuses bzw. der Hülse im Bereich der Strömungsmitteldurchgänge abheben. Sobald das bzw. die Stellorgane weit genug angehoben sind, daß die Dichtungen bei einem Drehvorgang geschont werden, endet der Führungsweg der Hebekulisse und die Drehkulisse bzw. Drehspur kann in Aktion treten, da die in Umfangsrichtung wirkende Kraft der Federeinrichtung nunmehr nicht mehr durch die Zwangsführung der Hebekulisse behindert wird. Das bzw. die Stellorgane können eine Drehung durchführen, die Federeinrichtung läßt ihre in Umfangsrichtung wirkenden Kräfte auf das Stellorgan bzw. die Stellorgane einwirken, dreht diese und das bzw. die Stellorgane schnellen in eine axiale Ruheposition zurück, in der das bzw. die Stellorgane in einer durch die Drehkulisse vorgegebenen Position festgehalten werden und die Dichtungen an vorgegebenen Stellen angepreßt werden.

Bei diesem Schaltvorgang können die Führungsstifte, die für die Bewegung in Axialrichtung sorgen, von einer Hebekulisse in eine andere Hebekulisse überwechseln, wobei ein Verbindungsweg zwischen den benachbarten Hebekulissen vorhanden sein muß. Hierdurch ist es möglich, daß durch einfaches Drücken oder Anheben des Betätigungselements über die Wirkung der Federeinrichtung eine Drehung des bzw. der Stellorgane in einer Drehrichtung und anschließend in der entgegengesetzten Drehrichtung vorgenommen werden kann.

Eine Führungs- bzw. Anschlageinrichtung kann ebenfalls entweder an dem Stellorgan bzw. den Stellorganen oder dem Innenbereich des Gehäuses bzw. der Hülse vorgesehen sein, um mit der Steuereinrichtung bzw. Steuerspur oder Steuerkulisse zusammenzuwirken, um zusammen mit dieser für die kontrollierte Steuerung des bzw. der Stellorgane in die vorgegebenen Stellungen zu sorgen.

Bei der Befestigung der Hülse in der Aufnahmebohrung ist zu beachten, daß ihre Außenwand gegenüber der Innenwand der Aufnahmebohrung soweit abdichten muß, daß ein Austritt des Heizungs-Strömungsmittels ebenso wie ein Kurzschluß zwischen den einzelnen Durchströmungskanälen verhindert ist.

Neben der bereits oben beschriebenen, bevorzugten Lösung einer begrenzt nachgiebigen Hülse, vorzugsweise aus Kunststoff oder einer mit Kunststoff beschichteten Metallhülse, kann dies etwa durch eine ausgeriebene Aufnahmebohrung ereicht werden, mit deren Umfangswand axial und radial Dichtungen in Eingriff stehen, die an der Außenseite der Hülse befestigt sind und etwa in eingestochenen Nuten sitzen. Die Hülse wird ihrerseits etwa mittels einer Überwurfmutter in ihrer Lage gehalten. Diese Ausführung hat den Vorteil, daß die Hülse erst beim Einbau des Ventils vom Monteur eingesetzt und zu Zwecken der Reparatur mit einem Werkzeug ähnlich einem Lagerabzieher ohne weiteres entfernt werden kann; der Monteur braucht nur eine begrenzte Anzahl von einheitlichen Gehäusen mitzuführen, in die unter Umständen erst nach ihrem Einbau eine vormontierte Hülse eingesetzt werden kann.

Besonders vorteilhaft ist es, wenn auf den Außenumfangsflächen der Hülse bzw. des Absperrventilkörpers und/oder den diesen Flächen in dem montierten Zustand gegenüberliegenden Flächen netz- bzw. maschenartige Dichtungen vorgesehen werden. Dabei ist es wesentlich, daß aneinander angrenzende Dichtelemente eines Dichtungsnetzes getrennte bspw. karo- oder rautenförmige Kammern bilden, die dann in einer Mehrzahl angeordnet eine sehr gute Dichtwirkung ergeben, ohne daß auf die Dichtwirkung eines einzelnen O-Ringes abgestellt werden muß. Paßungenauigkeiten, die bei einer O-Ring-Dichtung zu Leckagen führen müssen, können über die oben angesprochene netzartige Dichtung aufgefangen werden.

Es ist aber auch möglich, die Hülse selbst fest am Gehäuse anzubringen und die entsprechenden Stellorgane nachträglich einzusetzen.

In diesem Fall ist es möglich und in manchen Fällen vorteilhaft, etwa die Aufnahmebohrung über ihre ganze Länge mit einem Innengewinde und die Hülse mit einem Außengewinde zu versehen; die Gewindeverbindung wird mit üblichen Mitteln abgedichtet; bevorzugt ist die Hülse jedoch eingepreßt oder eingeschrumpft, so daß sie durch Preßsitz über ihre gesamte Außenfläche hinweg gegen die Innenwand der Aufnahmebohrung dichtend angedrückt und somit auch gehalten ist.

Es ist gemäß einer anderen Ausgestaltung der Erfindung aber gegebenenfalls auch von Vorteil, die Hülse in die Aufnahmebohrung einzukleben, was den Vorteil hat, daß bei Verwendung eines entsprechend spaltenfüllenden Klebers die Aufnahmebohrung bereits in der gegossenen Rohform oder jedenfalls nach dem Ausbohren ohne zusätzliches Ausreiben verwendet werden kann.

Das Einkleben der Hülse kann sowohl bei der Herstellung als auch beim Einbau des Ventiles erfolgen. Durch Erwärmung kann die Klebestelle notwendigenfalls gelöst werden.

Wie bereits oben erwähnt, ist es manchmal zweckmäßig, alleine die Hülse in das Gehäuse einzubauen und in diesem dann die Stellorgane entweder noch bei der Herstellung oder erst beim Einbau des Ventiles zu montieren; gemäß einer bevorzugten Ausgestaltung der Erfindung ist der vormontierten Hülse der Vorzug gegeben, so daß entweder herstellerseitig oder vom Monteur beim Einbau des Ventiles eine Patrone in die Aufnahmebohrung eingesetzt wird, die neben der Hülse bereits alle Stellorgane vormontiert enthält. Dies schließt Montagefehler beim Einbau des Ventiles aus und erleichtert die Arbeit des jeweiligen Monteurs.

Wenn nach längerem Gebrauch einmal eine Anschlußgarnitur schadhaft werden sollte, dann ist es nicht erforderlich, den Fehler zu lokalisieren, sondern es wird einfach die gesamte Einbaupatrone ausgewechselt, wobei höchstens die Aufnähmebohrung zu reinigen oder von Hand nachzureiben ist. In einem solchen Fall können zweckmäßigerweise auch alle Patronen einer gesamten, schon altersschwachen Heizungsanlage ausgetauscht werden, so daß eine Gesamtüberholung einer solchen Anlage rasch und kostengünstig durchführbar ist.

Am besten bewährt sich die Erfindung an einer Anschlußgarnitur mit einem im wesentlichen H-förmigen Gehäuse, mit jeweils zwei Stutzen zum Anschluß an die Rohrleitungen und an den Heizkörper, da bei einem solche Gehäuse der Querbalken des H ohne Beeinträchtigung der Stutzen soweit vergrößert werden kann, daß er die erfindungsgemäße Patrone aufnehmen kann. Ein zu gedrängter und damit erschwerter Aufbau wird somit verhindert.

Es wird nun der Aufbau der Patrone und den in ihr angebrachten Stellorganen anhand eines H-förmigen Ventilgehäuses beschrieben; es wird aber ausdrücklich darauf hingewiesen, daß eine solche Patrone und solche Stellorgane auch bei anders ausgebildeten Gehäusen eingesetzt werden können, z.B. bei nach hinten und somit zur Wand abgewinkelten Anschlußstützen zur Anbindung an das Heizsystem.

Die Patrone der bevorzugten Ausgestaltung ist als ein unverdrehbar und axial festgelegt in die Aufnahmebohrung eingebauter Hohlzylinder ausgebildet, der bevorzugt am einen Ende geschlossen ist und von zwei Radialbohrungen durchsetzt ist, deren Größe und Anordnung so bestimmt sind, daß sie eine unbehinderte Verbindung der Kanaleinmündungen mit dem Inneren des Hohlzylinders gestatten. Das geschlossene Ende ermöglicht den Einbau in eine beiderseits offene Aufnahmebohrung oder legt sich dicht an den Boden einer Sackbohrung an, so daß unter dem geschlossenen Ende kein Druck auftreten kann, der danach trachtet, die Patrone aus der Aufnahmebohrung herauszudrücken.

Der Hohlzylinder kann als Automatendrehteil, als Tiefziehteil, als Spritzgußteil oder als gegebenenfalls überdrehtes Tiefzieh-, Guß- oder Spritzgußteil ausgebildet sein, wobei nur die Oualität der Innenbohrung wesentlich ist, in welcher ein drehbarer, aber axial festgelegter Absperrventilkörper sitzt, der seinerseits zwei Querbohrungen aufweist, die so bemessen und angeordnet sind, daß einander gegenüberliegende Kanäle des Gehäuses je nach Drehlage des Absperrventilkörpers unbehindert miteinander kommunizieren können oder voneinander getrennt sind. Der Durchmesser des Absperrventilkörpers und somit der Aufnahmebohrung ist demnach bestimmt vom Durchmesser der Querbohrungen, der sich nur über weniger als 90° des Umfanges des Absperrventilkörpers erstrecken darf, und damit vom Durchmesser der Kanäle.

Am dem offenen Ende der Hülse zugewandten oder aus diesem austretenden Endabschnitt des Absperrventilkörpers kann eine Handhabe wie ein Schlitz zum Eingriff eines Werkzeugs oder ein Bedienungselement angebracht oder ausgebildet sein, der außerhalb des Gehäuses sitzt und mühelos vom Benutzer des Heizkörpers verdrehbar ist.

Der Absperrventilkörper kann einen kleineren Durchmesser als die lichte Weite der Hülse aufweisen und mit Ringdichtungen versehen sein, sitzt aber bevorzugt mit enger Spielpassung in der Hülse und ist mit dieser verrastet, etwa durch eine Schulter, die durch federndes oder bleibendes Verformen der Hülse in eine Innenringnut der Hülse eingreift oder eingerastet ist; es ist auch die Verrastung mit Hilfe eines Federringes sinnvoll. Da die Hülse bevorzugt aus einem flexiblen Werkstoff wie etwa Kunststoff besteht, kann sie beim Einsetzen des Absperrventilkörpers ohne weiteres über dessen Schulter hinweglaufen.

Eine solche Anordnung ist für ein Zweirohr-Heizungssystem vorgesehen.

Soll die Anschlußgarnitur für eine Einrohr-Heizungsanlage verwendbar sein, dann sind die beiden Querbohrungen durch eine Längsbohrung miteinander und jeweils eine zu diesen um 90° versetzte weitere radiale Bypassbohrung mit dem Außenumfang verbunden, so daß in Schließstellung des Absperr-Ventilkörpers die Bypassbohrungen mit den Kanaleinmündungen für Zu- und Ablauf fluchten und zusammen mit der Längsbohrung diese durch einen Bypass verbinden. Bei offener Anschlußgarnitur fließt ein Nebenstrom des Heizungs-Strömungsmittels durch den Heizkörper, während ein Hauptstrom durch die Längsbohrung fließt.

In der Längsbohrung ist bevorzugt zwischen den Querbohrungen (und Bypassbohrungen) ein Ventilsitz ausgebildet, der durch einen Drossel-Ventilkörper mehr oder weniger absperrbar ist. Dieser weist ein Außengewinde auf, das in ein Innengewinde in der Längsbohrung eingreift, wodurch der Drossel-Ventilkörper verdrehbar, aber axial im wesentlichen festliegend bleibt. Die Verdrehung erfolgt bevorzugt mittels eines Werkzeugs wie eines Schraubendrehers.

Das Innengewinde ist vorteilhaft außerhalb des Bereiches zwischen den beiden Querbohrungen angeordnet, liegt aber in einer bevorzugten Ausgestaltung dennoch zwischen diesen, um die Baulänge der Einbaupatrone zu verkürzen. Damit der Gewindeteil des Drossel-Ventilkörpers die Strömung in der Längsbohrung nicht absperrt, ist er durch mindestens eine Längsnut oder -bohrung im Drossel-Ventilkörper überbrückt.

Vorteilhafterweise kann die erfindungsgemäße Anschlußgarnitur bzw. die erfindungsgemäße Patrone mit Durchgängen bzw. Bohrungen unterschiedlichen Innendurchmessers ausgestattet sein, um innerhalb der erfindungsgemaßen Anschlußgarnitur einen Staudruck zu erzeugen. Werden innerhalb des Durchgangsweges des Heizmediums Verengungen bzw. Erweiterungen angeordnet, so bilden sich vor und hinter diesen Verengungen bzw. Erweiterungen Druckdifferenzen aus, die zur Regelung herangezogen werden können. Zu diesem Zweck können die Radialbohrungen und/oder die Querbohrungen und/oder die Bypaßbohrungen unterschiedliche Durchmesser aufweisen, um die angesprochenen Druckdifferenzen bzw. Staudrücke zu erzeugen. Selbstverständlich können auch ansonsten an verschiedenen Stellen der erfindungsgemäßen Anschlußgarnitur bzw. Patrone Verengungen oder Erweiterungen für den Durchfluß des Heizmediums vorgesehen werden.

Die entstehenden Druckdifferenzen können mittels einer Meß- oder Regeleinrichtung zur Steuerung des Durchsatzes am Heizmedium eingesetzt werden. Hier sind insbesondere Membranregelventile vorteilhaft, wobei die Druckdifferenz an einer Membran angreift, diese beeinflußt und unmittelbar zur Regelung des Durchflusses des Heizmediums führt.

Die Erfindung betrifft nicht nur die gesamte Anschlußgarnitur, sondern ausdrücklich aud eine Patrone zum Einbau in eine Anschlußgarnitur, deren Gehäuse eine geeignete Querbohrung aufweist.

Der Gegenstand der Erfindung wird anhand der beigelegten, schematischen Zeichnung bevorzugter Ausführungsbeispiele näher erläutert. Dabei werden weitere Vorteile und Merkmale gemäß der Erfindung offenbart. In dieser zeigt:
- Fig. 1: einen Längsschnitt durch ein erfindungsgemäßen Ventilgehäuse,
- Fig. 2: einen Längsschnitt durch eine erfindungsgemäße Patrone,
- Fig. 3: einen Längsschnitt wie in Fig. 1, jedoch mit der eingebauten Patrone der Fig. 2, und
- Fig. 4: einen Längsschnitt durch ein Ventilgehäuse gemäß der Erfindung, mit einer automatischen Selbstpositionierung.

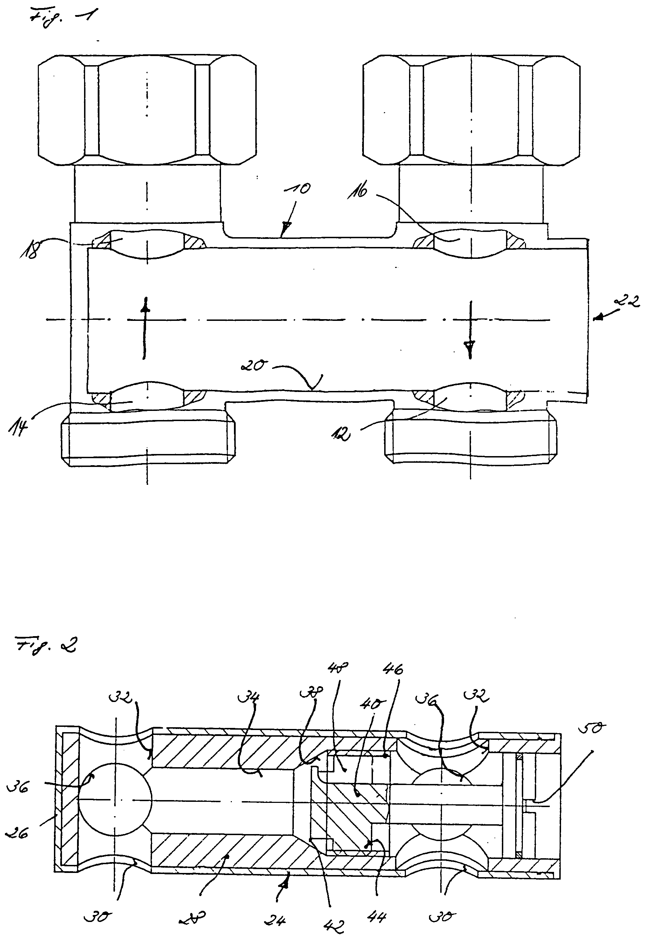

Fig. 1 zeigt im Längsschnitt ein Gehäuse 10, das vorzugsweise als Buntmetallguß- oder Schmiedeteil ausgebildet ist, mit einem im wesentlichen zylindrischen Mittelteil, das von einer zylindrischen Aufnahmebohrung 20 über seine nahezu volle Länge durchsetzt ist. Das offene Ende der Aufnahmebohrung 20 ist mit dem Bezugszeichen 22 bezeichnet.

Radial zur Aufnahmebohrung sind einander paarweise gegenüberliegende Stutzen angeordnet, an deren freiem Außenende jeweils ein Gewinde angeordnet ist.

Es sind somit im Inneren der Stutzen vier Kanäle gebildet, nämlich ein von einem Heizungs-Rohrsystem herführender Warmwasser-Zuleitungskanal 12, ein Heizkörper-Zuleitungskanal 16, ein Heizkörper-Ableitungskanal 18 und ein zum Rohrsystem führender Ableitungskanal 14.

Alle Kanäle verlaufen parallel und münden in die Aufnahmebohrung 20 ein, je zwei Kanäle 12, 16 bzw. 14, 18 sind zueinander koaxial.

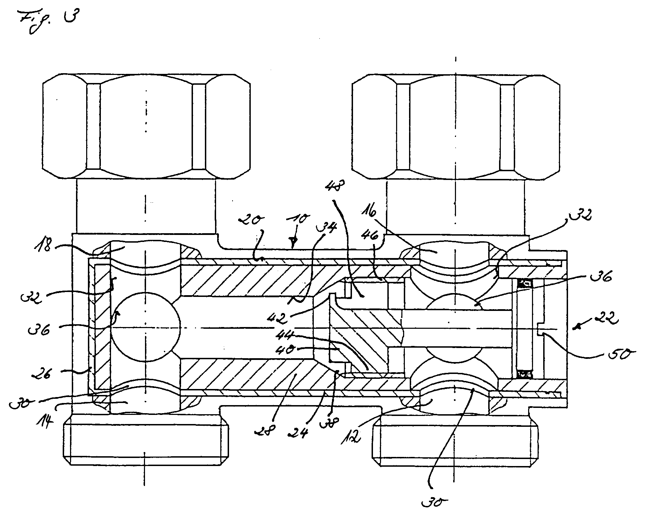

Durch das offene Ende 22 ist in die Aufnahmebohrung 20 eine Patrone eingeführt und in dieser befestigt; diese Patrone ist in Fig. 2 im Längsschnitt gezeigt.

Diese Patrone weist eine zylindermantelförmige Hülse 24 auf, deren eines Ende durch einen mit der Umfangswand einstückig ausgebildeten Boden 26 verschlossen ist und die aus einem flexiblen Werkstoff besteht. Andererseits ist es jedoch auch möglich, den Absperrventilkörper 28 ohne zusätzliche Hülse 24 direkt in die Aufnahmebohrung 20 einzuführen, wenn die jeweiligen Teile nur hinreichend paßgenau angefertigt werden.

Die Umfangswand ist von zwei zueinander parallelen Radialbohrungen 30 durchsetzt; wenn die Hülse in die Aufnahmebohrung 20 des Ventilgehäuses 10 unverdrehbar und axial unbeweglich eingebaut ist (Fig. 1), dann fluchten die von den Radialbohrungen 30 in der Umfangswand ausgesparten Öffnungen mit den Einmündungen der Kanäle 12, 14, 16 und 18 in die Aufnahmebohrung 20. Alle Kanäle und deren Einmündungen weisen vorzugsweise den jeweils gleichen Innendurchmesser auf.

Vorteilhafterweise können die Durchgangsleitungen bzw. Bohrungen 30, 32, 36 unterschiedliche Innendurchmesser aufweisen, um innerhalb der Anschlußgarnitur einen Differenzdruck zu erzeugen, der zur Regelung des Durchflusses am Heizmedium herangezogen werden kann.

Hier eignet sich insbesondere ein Membranregelventil, bei dem aufgrund der durch die unterschiedlichen Innendurchmesser erzeugten Druckdifferenz eine Membran ausgelenkt wird, wobei die Auslenkung der Membran unmittelbar zur Regelung des Durchflusses herangezogen werden kann.

Selbstverständlich können hier auch andere Meßeinrichtungen herangezogen werden, um aufgrund der Druckdifferenz eine Messung bzw. Regelung durchzuführen. Diese wären jedoch in der Regel aufwendiger als wenn in der erfindungsgemäßen Anschlußgarnitur bzw. Patrone eine den Anforderungen genügende Regelmembran eingesetzt werden würde.

Im Inneren der Hülse 24 sitzt mit enger Spielpassung verdrehbar ein Absperrventilkörper 28, der - gegebenenfalls mit Hilfe eines geeigneten Ventilfettes - mit der gesamten Innenoberfläche der Hülse 24, auch mit der des Bodens 26, in dichtendem Eingriff steht.

Die Hülse hat zwei Querbohrungen 32, die in einer entsprechenden Drehlage des Absperrventilkörpers 28 die von den Radialbohrungen 30 gebildeten Wandöffnungen verbinden. Die den Kanal 18 mit dem Kanal 14 verbindende Querbohrung 32 weist vorzugsweise den gleichen Durchmesser auf wie die zugehörige Radialbohrung 30, während die die Kanäle 12 und 16 verbindende Querbohrung 32 einen größeren Durchmesser aufweist als die zugehörige Radialbohrung 30.

Ferner sind zwei Bypassbohrungen 36 vorgesehen, die rechtwinklig zu den Querbohrungen 32 und radial zum Absperrventilkörper 28 stehen und den vorzugsweise gleichen Durchmesser aufweisen wie die Kanäle 12, 14, 16, 18. Die Mittelachsen jeweils einer Bypassbohrung 36 und der zusammengehörigen Querbohrung 32 liegen jeweils in einer gemeinsamen, zur Mittelachse des Absperrventilkörpers 20 und damit der Aufnahmebohrungen 20 radialen Ebene.

Der Absperrventilkörper 38 ist von einer axialen Längsbohrung 34 durchsetzt, die von dem am offenen Ende 22 gelegenen Endabschnitt des Absperrventils 28 ausgehend einen ersten Bohrungsabschnitt mit großem Durchmesser aufweist, der die die Kanäle 12 und 16 verbindende Querbohrung kreuzt, dann einen zweiten Bohrungsabschnitt mit einem Innengewinde 46, dessen größter Durchmesser (Bolzendurchmesser) dem des ersten Abschnitts entspricht, dann einen sich konisch verjüngenden Sitz 38 und schließlich einen Bypassabschnitt, dessen Durchmesser etwa jenem der Bypassbohrungen 36 entspricht und der in der Querbohrung 32 ausläuft, die die Kanäle 14 und 18 verbindet.

Im ersten Abschnitt der Längsbohrung 34 befindet sich der schlanke Schaft eines Drossel-Ventilkörpers 40, der einen Drosselkörper mit einem Außengewinde 44 aufweist, welcher seinerseits einen Gegensitz aufweist, der dem Sitz 38 gegenüberliegt. Das Außengewinde 44 greift in das Innengewinde 46 ein.

An dem vom Drosselkörper abgewandten Ende des Schaftes sitzt ein Schraubenkopf, der einen vom offenen Ende her zugänglichen Schraubenschlitz 50 aufweist und an seinem Umfang eine Ringnut mit einer Ringdichtung trägt, die gegenüber der Innenwand des ersten Abschnitts der Längsbohrung 34 abdichtet.

Wird der Schraubenkopf durch Eingriff des Schlitzes 50 mit einem Werkzeug gedreht, dann vergrößert oder verkleinert sich der Abstand zwischen dem Sitz 38 und dem Gegensitz 42. Hierbei stellen drei Längsnuten 48, die in den Umfang des Außengewindes 44 des Drossel-Ventilkörpers 40 mit gleichem gegenseitigem Winkelabstand eingebracht sind, die Strömungsmittelverbindung zwischen dem letzten und dem ersten Abschnitt der Längsbohrung 34 her.

In der geschlossenen Stellung, also wenn der Abstand zwischen dem Sitz 38 und dem Gegensitz 42 gegen Null geht, ist die Strömungsmittelverbindung zwischen dem Zuleitungskanal des Heizkörpers 16 und dem zum Rohrsystem führenden Ableitungskanal 14 unterbrochen, was der Einbausituation des sogenannten Zweirohrsystems entspricht.

Wie in Fig. 2 zu sehen, weist der Absperrventilkörper 28 an seinem freien Ende einen Ringflansch auf, der sich auf dem Ende der Hülse 24 abstützt, sowie an der Außenumfangsfläche nahe dem Ringflansch einen schmalen Umfangssteg, der in eine Ringnut in der Innenoberfläche der Hülse 24 eingeschnappt ist.

Der Absperrventilkörper weist einen in der Zeichnung nicht dargestellten Bedienungs-Handgriff auf, der jedoch den Zugriff zum Schraubenschlitz 50 nicht oder nicht immer versperrt.

Der Absperrventilkörper 28 und der Drossel-Ventilkörper 40 können als Automatendrehteile aus Messing ausgebildet sein, andere Fertigungsverfahren, wie z. B. Guß oder Spritzguß sind durchaus denkbar, ebenso andere Werkstoffe.

Der Drossel-Ventilkörper 40 behält bei Betätigung des Absperrventilkörpers 28 seine Voreinstellung bei. Dies ist besonders wichtig, wenn nach längerem Betrieb der Anlage ein Heizkörper vom Netz getrennt wird, die Voreinstellung aber nicht festgehalten wurde oder nicht mehr bekannt ist.

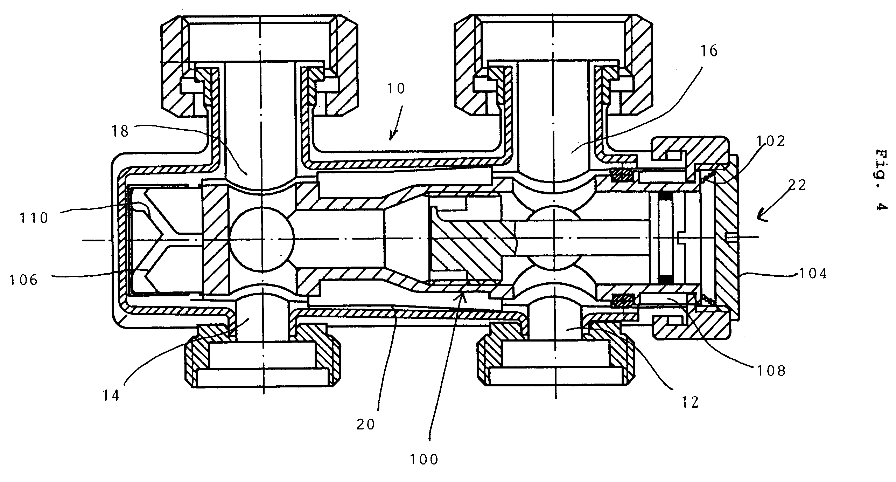

Fig. 3 zeigt die Patrone der Fig. 2, eingebaut in das Gehäuse der Fig. 1.

In Fig. 4 ist eine besonders vorteilhafte Ausgestaltung gemäß der vorliegenden Erfindung wiedergegeben. Eine entsprechende Vorrichtung, wie sie in Fig. 4 dargestellt ist, kann sowohl für Drosselventile mit einem Strömungsmitteldurchgang als auch für Drosselventile mit zwei oder mehrerenen sowie mit oder ohne Bypaß bzw. Bypässen erfindungsgemäß eingesetzt werden.

Dabei kann die Ausführungsform gemäß Fig. 4 gleichermaßen sämtliche Merkmale aufweisen, wie sie auch in den Fig. 1 bis 3 wiedergegeben sind.

In Fig. 4 sind hauptsächlich die zusätzlichen Merkmale wiedergegeben, wie sie in bezug auf die Ausführungsformen gemäß den Fig. 1 bis 3 nicht eingesetzt werden.

So ist eine Federeinrichtung 102 vorgesehen, über die sowohl in Axialrichtung der Funktionseinrichtung bzw. Patrone 100 als auch in deren Umfangsrichtung eine Kraft aufbringbar ist. Diese von der Federeinrichtung aufgebrachte Kraft kann mittels zweier Zwangsführungen bzw. Führungseinrichtungen 106 und 108 derart umgesetzt werden, daß das bzw. die Stellorgane in vorgegebene Stellpositionen überführbar sind.

Ein Anschlag 110 sorgt dafür, daß das bzw. die Stellorgane, die den Strömungsmitteldurchfluß durch die vorhandenen Strömungsmitteldurchgänge und/oder Bypässe regeln, in vorgegebenen Stellungen gehalten werden.

Um die verschiedenen Verstellvorgänge, die Kinematik und die Schonung etwa vorhandener Dichtungen zu verbessern, sind zumindest der Innenumfang der Hülse 20 und/oder der Außenumfang der Funktionseinrichtung bzw. Patrone 100 zumindest teilweise gleichermaßen oder differierend konisch ausgebildet, so daß beim Herausziehen des bzw. der Stellorgane ein Spalt entsteht, so daß etwaige Dichtungsflächen während des Drehens des bzw. der Stellorgane keinen Reibkontakt zu der Innenwandung der Hülse 20 bekommen und damit geschont werden.

Die Federeinrichtung 102 ist vorzugsweise eine konische Spiralfeder, jedoch ist es auch möglich, diese Spiralfeder durch eine elektromagnetische Stelleinrichtung oder dergleichen zu ersetzen, die automatisch Kräfte sowohl in Axial- als auch in Umfangsrichtung des bzw. der Stellorgane aufbringt.

## Patentansprüche

1. Anschlußvorrichtung zum Anschluß eines Körpers, insbesondere Heizkörpers, an ein Rohrsystem, insbesondere Heizungsrohrssystem, einer mit einem Strömungsmittel betriebenen Anlage, insbesondere Heizungsanlage,
a) mit einem Gehäuse (10),
b) mit mindestens einem Anschlußabschnitt zur Verbindung mit dem Körper, insbesondere Heizkörper, und dem Rohrsystem, insbesondere Heizungsrohrsystem, und
c) mit mindestens einer Stelleinrichtung zur Beeinflussung des Strömungsmittels, vorzugsweise ein Wärmeträger, im Bereich des Anschlußabschnitts, insbesondere in einem Durchströmungskanal im Bereich des Anschlußabschnitts,
**gekennzeichnet** durch die folgenden Merkmale:
d) das Gehäuse (10) weist wenigstens eine, wenigstens einseitig offene Aufnahmeöffnung bzw. -bohrung (20) auf, die
d1) wenigstens einen Durchströmungskanal (12, 16 und 14, 18) an wenigstens einer Stelle schneidet, und
d2) eine einsetzbare Funktionseinrichtung (100), insbesondere eine Patrone, mit wenigstens einer Stelleinrichtung (28, 40) aufweist.

2. Anschlußvorrichtung nach Anspruch 1, dadurch **gekennzeichnet**, daß die Funktionseinrichtung (100) eine Hülse (24) aufweist, in welcher das wenigstens eine Stellorgan (28, 40) aufgenommen ist.

3. Anschlußvorrichtung nach einem der Ansprüche 1 oder 2, mit jeweils einem von außerhalb des Gehäuses her zugänglichen Bedienungselement an mindestens einem der Stelleinrichtungen, dadurch **gekennzeichnet**, daß das Bedienungselement (50) in dem Bereich der Patrone angeordnet ist, der durch das offene Ende (22) der Aufnahmebohrung (20) zugänglich ist oder aus diesem herausragt, wobei insbesondere bei mehreren, bevorzugt als Drehgriffe ausgebildeten Bedienungselementen diese konzentrisch zueinander angeordnet sind.

4. Anschlußvorrichtung nach einem der Ansprüche 1 bis 3, dadurch **gekennzeichnet**, daß die Stelleinrichtung bzw. Stelleinrichtungen (28, 40) über mindestens eine Federeinrichtung (102), vorzugsweise eine konische Spiralfeder oder dergleichen, betätigbar sind, wobei durch die Federeinrichtung (102) vorzugsweise sowohl in Axialrichtung als auch in Umfangsrichtung der Stelleinrichtung(en) (28, 40) Kräfte aufbringbar sind.

5. Anschlußvorrichtung nach einem der Ansprüche 1 bis 4, dadurch **gekennzeichnet**, daß die Stelleinrichtung bzw. Stelleinrichtungen (28, 40) mittels eines axial-parallel zur Funktionseinrichtung (100) bzw. Patrone vorzugsweise reversibel verstellbaren Bedienungselements (104) betätigbar sind, das direkt oder über die mindestens eine Federeinrichtung auf die Stelleinrichtung(en) (28, 40) einwirkt.

6. Anschlußvorrichtung nach einem der Ansprüche 1 bis 5, dadurch **gekennzeichnet**, daß mindestens eine Steuereinrichtung (106, 108, 110), vorzugsweise eine Steuerspur bzw. Steuerkulisse oder dergleichen, vorgesehen ist, mit der mindestens eine vorgebbare Stellung des bzw. der Stelleinrichtungen bzw. -organe reversibel einstellbar sind, wobei die Betätigung vorzugsweise über das oder die Bedienungselemente (104) bzw. das oder die Federeinrichtungen (102) durchführbar ist.

7. Anschlußvorrichtung nach einem der Ansprüche 4 bis 6, dadurch **gekennzeichnet**, daß eine die Stelleinrichtung vorzugsweise axial-parallel zu dieser führende Steuerspur, insbesondere Hebekulisse (108), vorgesehen ist, durch die die Stelleinrichtung bzw. -einrichtungen (28, 40) über das Bedienungselement (104) und/oder die Federeinrichtung (106) vorzugsweise axial-parallel (X) zur Stelleinrichtung bewegbar ist.

8. Anschlußvorrichtung nach einem der Ansprüche 1 bis 7, dadurch **gekennzeichnet**, daß eine Steuerspur (106) an der Funktionseinrichtung (100) bzw. der Stelleinrichtung vorgesehen ist, die mit einer Führungs- bzw. Anschlageinrichtung (110) in Wirkverbindung bringbar ist, um vorgebbare Stellungen zur Steuerung des Strömungsmittels reversibel einzustellen.

9. Anschlußeinrichtung mit einem im wesentlichen H-förmigen Gehäuse, nach einem der Ansprüche 2 bis 8, dadurch **gekennzeichnet**,
- daß die Hülse als Hohlzylinder (20) mit einem ihr eines Ende verschließenden Boden (26) ausgebildet ist, wobei seine Wand von mindestens einer, vorzugsweise zwei durchgehenden Radialkanälen bzw. -bohrungen (30) durchsetzt ist, die mit den Durchströmungskanälen (12, 16 und 14, 18) fluchtend anordenbar sind, und
- daß im Hohlzylinder (20) drehbar und dichtend ein bevorzugt zylinderförmiger Absperrventilkörper (28) sitzt, der vorzugsweise zwei Querkanäle bzw. -bohrungen (32) aufweist, die in einer bestimmten Drehlage des Absperrventilkörpers (28) mit den Radialkanälen bzw. -bohrungen (30) im Hohlzylinder (20) fluchten.

10. Anschlußgarnitur nach Anspruch 9, dadurch **gekennzeichnet**, daß der Absperrventilkörper (28) einen die Querkanäle bzw. -bohrungen (32) verbindenden Längskanal bzw. -bohrung (34) und bevorzugt zwei radiale Bypaßkanäle bzw. -bohrungen (36) aufweist, die senkrecht zu den Querkanälen bzw. -bohrungen (32) stehen und in diese einmünden.

11. Anschlußgarnitur nach Anspruch 10, dadurch **gekennzeichnet**,
- daß die Längsbohrung (34) einen zwischen den Querbohrungen (32) liegenden Sitz (38) aufweist, und
- daß dem Sitz (38) gegenüberliegend ein Gegensitz (42) eines axialbeweglichen Drossel-Ventilkörpers (40) angeordnet ist.

12. Anschlußgarnitur nach Anspruch 11, dadurch **gekennzeichnet**, daß der Drossel-Ventilkörper (40) ein Außengewinde (44) aufweist, das in ein Innengewinde (46) in dem Längskanal bzw. -bohrung (26) eingreift, wobei insbesondere
- das Innengewinde (46) des Längskanals bzw. -bohrung (34) zwischen dem Sitz 38) und einer der Querkanäle bzw. -bohrungen (32), vorzugsweise der dem offenen Ende (22) der Hülse bzw. des Aufnahmekanals (20) nächstgelegenen, angeordnet ist, und
- das Außengewinde mit mindestens einer Längsverbindung bzw. -nut (48) oder einer Längsbohrung versehen ist, durch die ein Bypaßweg ausbildbar ist.

13. Anschlußgarnitur nach einem der Ansprüche 9 bis 12, dadurch **gekennzeichnet**, daß die Radialkanäle bzw. -bohrungen (30) und/oder die Querkanäle bzw. -bohrungen (32) und/oder die Bypaßkanäle bzw. -bohrungen (36) unterschiedliche Durchmesser aufweisen, insbesondere, um Druckdifferenzen für eine Meß- bzw. Regeleinrichtung, beispielsweise ein Membranventil, zu erzeugen.

14. Anschlußgarnitur nach einem der Ansprüche 2 bis 13, dadurch **gekennzeichnet**, daß an der umfänglichen Oberfläche der Funktionseinrichtung bzw. der Hülse (24) und/oder des Absperrventilkörpers (28) bzw. den deren Oberflächen gegenüberliegenden Oberflächen mehrere zueinander benachbarte Dichtelemente angeordnet sind, die mehrere Kammern bilden, und vorzugsweise an mindestens einer der Oberflächen eine netz- bzw. maschenartige Struktur vorgesehen ist, die die mehreren Dichtelemente aufweist und die mehreren Kammern bildet.

15. Patrone zum Einbau in die Aufnahmebohrung eines Ventilgehäuses nach Anspruch 1, dadurch **gekennzeichnet**, daß sie eine dichtend in der Aufnahmebohrung (20) anordenbare Patrone mit Öffnungen (Radialbohrungen 30) aufweist, in welcher wenigstens ein Stellorgan (28, 40) zur Beeinflussung von Heizungs-Strömungsmittel angeordnet ist, und vorzugsweise dadurch, daß die Patrone die Merkmale mindestens eines der Ansprüche 2 bis 14 aufweist.
